# EUROPEAN PATENT SPECIFICATION

(11) **EP 4 401 864 B1**
(45) Date of publication and mention of the grant of the patent: **05.11.2025**
(21) Application number: 22798239.4
(22) Date of filing: 13.09.2022
(51) Int. Cl.: B01D 53/14, B01D 53/18

(54) **METHOD FOR CAPTURING CO² FROM A FLUE GAS FROM A DISTRICT HEATING PLANT**
VERFAHREN ZUR ABSCHEIDUNG VON CO² AUS EINEM RAUCHGAS AUS EINER FERNWÄRMEANLAGE
PROCÉDÉ DE CAPTURE DE CO² PARTIR D'UN GAZ DE COMBUSTION PROVENANT D'UNE INSTALLATION DE CHAUFFAGE URBAIN

(30) Priority: 14.09.2021 NO 20211107
(43) Date of publication of application: 24.07.2024
(73) Proprietor: CAPSOL TECHNOLOGIES ASA, 0277 Oslo (NO)
(72) Inventor: HAMRIN, Stellan, 73693 Kungsör (SE)
(74) Representative: Bryn Aarflot AS
(86) International application number: PCT/EP2022/075447
(87) International publication number: WO 2023/041541

(56) References cited:
- EP-A1- 1 874 435
- EP-B1- 1 874 435
- WO-A1-2010/142716
- WO-A1-2017/042163
- US-A- 4 617 182
- US-A- 5 378 442

## Description

### Field of invention

The present invention relates to capture of CO₂ from an CO₂ containing flue gas. More specifically the invention relates to CO₂ capture from a low temperature flue gas. A typical source for low temperature flue gas is a plant for district heating or a combined power and heat plant for generation of heat and electrical power.

### Background

The increase in atmospheric CO₂ concentration leading to global climate change is of great concern and have caused pressure towards stopping, or at least dramatically reducing, the use of fossil fuels and towards a change to renewable energy resources. However, a rapidly growing global energy demand and the fact that a change from fossil to renewable energy sources takes time and is expensive, carbonaceous fuels are expected to be important as energy sources for decades to come. Carbon Capture and Storage (CCS) has therefore become important in reducing the global CO₂ emission.

Many concepts and projects for CO₂ capture have been suggested, but few of them have developed from idea or drawing to actual projects, due to both high investment and running cost of such plants, and the lack of political support.

Most of the proposed projects for CO₂ capture are based on post combustion CO₂ capture, where CO₂ containing flue gas is introduced into an absorber, where the CO₂ containing gas is brought in intimate contact with a CO2 absorbent to remove or at least substantially reduce the CO₂ content of the flue gas before it is released into the surroundings. The absorbent having absorbed CO₂ is then introduced into a stripper to regenerate the absorbent for re-use, and the captured CO₂ is removed for deposition / storage.

The most commonly suggested absorbents are inorganic absorbents, normally aqueous solutions of potassium carbonate, and organic absorbents, normally aqueous solutions of one or more organic amines or amino acids. Organic absorbents are prone to degradation during use, especially in presence of oxygen. Some of the degradation products of amines known from operation of such plants are known to be toxic and carcinogenic, and may be released into the surroundings together with the CO₂ depleted flue gas. Operation of a capture plant using organic absorbents at a higher pressure than atmospheric pressure increases the problem of degradation as the partial pressure of oxygen is increased by compression. Potassium carbonate, on the other hand, is relatively inexpensive, is chemically stable at the operating conditions of the capture plant and produces no toxic or carcinogenic degradation products.

The speed of reaction and system equilibria for capture of CO₂ in a capture plant is highly dependent on the partial pressure of CO₂ in the absorber, i.e., the part of the capture plant where the CO₂ containing gas is brought in intimate contact with the absorbent. Additionally, using high pressure reduces the gas volume, and makes it possible to reduce the size of the plant significantly, and thus reducing the construction cost.

WO 0048709, to Norsk Hydro, relates to a method for capturing CO₂ from a flue gas from a primary power plant, more specifically a gas turbine-based power plant. Expanded and cooled flue gas from the gas turbine power plant is re-compressed to a pressure of 5 to 30 bar, typically 7 to 20 bar, and cooled before the compressed gas is introduced into an absorber and brought in contact with an amine absorbent in an absorber of a CO2 capture plant. The CO₂ depleted flue gas is reheated against the incoming flue gas before expansion of the gas over a turbine to give power for compression of the incoming flue gas. The drawback of this approach is that it needs a steam turbine plant and a separate HRSG to fully exploit the heat in the flue gas.

Flue gas from a district heating plant is typically cooled to about 70 - 50 °C, typically about 60 °C depending on the actual construction of the plant, by heating of the heat medium circulating in the district heating system and use the recovered energy of heat for generation of more hot heat medium for district heating. Flue gas temperatures lower than 60 °C for heating of the heat medium to temperatures to be used in district heating is far too expensive. District heating is often based on waste incineration which gives a flue gas with a dew point of about 60 °C. Accordingly, the flue gas from a district heating plant based on waste incineration at 60 °C is substantially water saturated. Flue gas from plants burning other fuels may have a higher or lower dew point.

US2021/060478A1 describes a plant and a method for CO₂ capture at an elevated pressure. The incoming flue gas is introduced into a gas turbine with an external combustion chamber and is used as an oxygen containing gas for combustion of natural gas in the combustion chamber. The compressed flue gas leaving the combustion chamber is introduced into a CO₂ capture part of the plant after being heat exchanged against CO₂ lean gas leaving the CO₂ capture part. After being reheated in the heat exchangers, the CO₂ lean gas is expanded and released into the surroundings.

KR20170132623A relates to an amine-based CO₂ capture plant operating at about ambient pressure. According to one embodiment, the CO₂ rich gas flow leaving the stripper is introduced into a heat exchanger for preheating of water for district heating, before the gas is further cooled and flashed in a flash tank to separate condensed water from a CO₂ rich gas phase which is further dried and compressed.

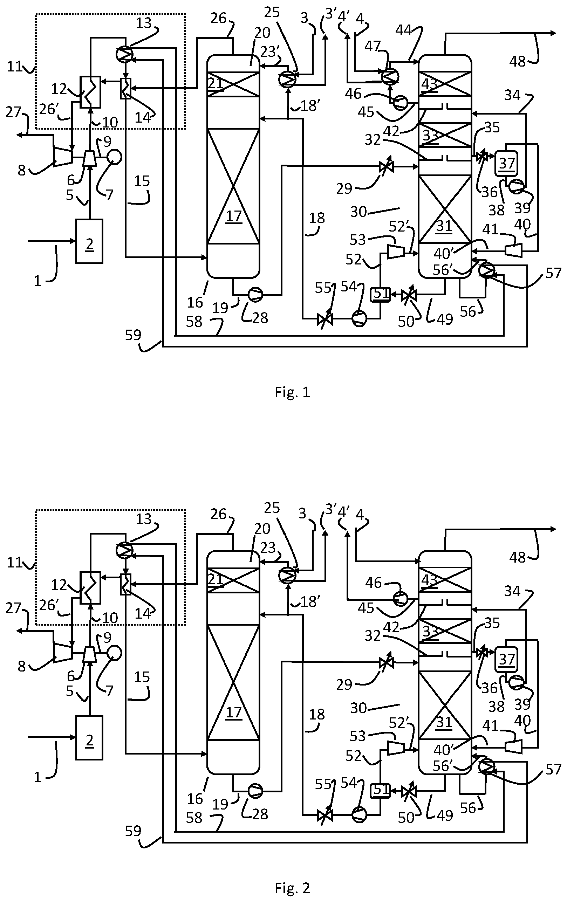

US10227901B2 relates to a methanation method and a power plant comprising CO₂ methanation of the CO₂ in the flue gas from the plant. Figure 1 includes a principle sketch of the CO₂ capture part of the plant, included cooling / washing sections at the top of the absorber and the stripper, respectively.

WO2017042163, to Capsol-EOP AS, describes a plant and method for CO₂ capture from an CO₂ containing flue gas, such as flue gas from a fossil fired power plant, where CO₂ is captured at an elevated pressure and where measures for reducing heat loss and corresponding energy cost, is implemented to reduce the cost for CO₂ capture. The flue gas is cooled from the typical temperature of the flue gas of about 70 - 50 °C, such as 60 °C, to typically about 30 °C before compression to reduce the humidity in the flue gas and thereby to reduce the compressor duty for flue gas compression. The energy of heat and condensation of the incoming flue gas to the temperature of about 30 °C is normally considered as waste heat and is released into the surroundings

The cost for CO₂ capture is often considered to be too high, and waste heat is an important part of the cost. The present invention relates to enabling a CO₂ capture plant to deliver energy of heat back to an energy plant, such as a plant for district heating, to increase the generation of hot heat medium for district heating and thus increase the energy output from the energy plant.

### Summary of the invention

According to a first aspect, the present invention relates to a method for capturing CO₂ from a flue gas from a district heating plant fired on a carbonaceous fuel, where the flue gas is compressed and thereafter cooled before the flue gas is introduced into an absorber, where the flue gas is brought in countercurrent flow to an aqueous CO₂ absorbent solution introduced into the absorber, to give a lean flue gas that is withdrawn from the absorber, reheated against incoming compressed flue gas, and thereafter expanded and released into the atmosphere, where the rich absorbent having absorbed CO₂ is collected at the bottom of the absorber, withdrawn therefrom and introduced into a regenerator in which the CO₂ rich absorbent is stripped to release CO₂ by countercurrent flow to steam to give a lean absorbent, withdrawing the stripped, or lean absorbent from the bottom of the regenerator and introduction of the lean absorbent into the absorber, and withdrawing of the CO₂ stripped of the absorbent and steam from the regenerator for further treatment and export for deposition of the CO₂, characterized in that the flow of lean absorbent is split in two, a first flow which is introduced at the top of an absorbent packing in the absorber, and a second flow which is introduced at the top of a cooler packing at the top of the absorber for cooling and drying of the lean flue gas before being reheated against incoming compressed flue gas, and thereafter expanded and released into the surrounding, and wherein the second absorbent flow is cooled against a heat fluid received from the district heating plant and wherein the thus heated heat fluid is led back to the district heating plant.

The flue gas introduced at the bottom of the absorber and brought into countercurrent flow to an aqueous potassium carbonate absorbent is heated as the CO₂ absorption is an exothermic reaction. As the thus heated lean flue gas is in intimate contact with water during heating, the lean flue gas leaving the absorber packing will be water saturated. The skilled person will understand that when the lean exhaust gas leaving the absorber is cooled from a temperature of typically about 100 deg. C , a substantial part of the humidity in the saturated gas will condensate, dependent on the temperature of the gas after cooling. Both the energy heat due to the cooling and the condensation energy will be transferred to the heat medium used for cooling of the gas and this energy may be used for other purposes, such as district heating

According to a first embodiment, CO₂ and steam stripped of the absorbent is cooled by countercurrent flow to cooling water in a CO₂ cooler arranged at the top of the regenerator before the CO₂ is withdrawn for further treatment, and where the heat transferred from the CO₂ and steam to the cooling water is transferred directly or indirectly to the district heating plant.

According to another embodiment the cooling water used to cool the CO₂ and steam in the CO₂ cooler is water circulated as heat fluid in the district heating plant, where water received from the district heating plant is introduced as cooling water to the top of the CO₂ cooler, and the used and thus heated cooling water collected below the cooler is returned to the district heating plant.

According to yet an embodiment, the cooling water used to cool the CO₂ and steam in the CO₂ cooler circulates in a loop and where the cooling water is cooled in a CO₂ cooler heat exchanger against a heat medium received from and circulated back to the district heating plant to transfer the heat thereto.

According to one embodiment, the second flow of lean absorbent which is introduced to the top of the cooler packing at the top of the absorber constitutes from 10 to 60 %, such as 20 to 50 % of the total flow of lean absorbent introduced to the absorber column.

The second flow of lean absorbent may be cooled to a temperature from 55 to 75 deg. C, such as from 60 to 70 deg. C.

According to one embodiment, the incoming flue gas to be compressed is water saturated and has a temperature of 50 to 70 deg. C.

According to a second aspect, the plant for capturing CO₂ from a flue gas from a district heating plant fired on a carbonaceous fuel comprising a flue gas pipe (1) for introduction of the flue gas into a flue gas compressor (6) operated by a motor (7), and/or another driver such as a steam turbine (7), a compressed flue gas pipe (10) for introducing the compressed flue gas into a heat exchange unit (11) wherein the compressed flue gas is cooled against a CO2 lean flue gas, a cooled flue gas pipe (15) for withdrawing the cooled flue gas and introduction thereof into absorber column (16) below packed section (17) , a lean absorbent pipe (18) for introduction of lean absorbent at the top of the packed section (17), a lean flue gas pipe (26) connected to the top of the absorbent column (16) for leading the lean flue gas from the absorber column (16) to the heat exchange unit (11) to be heated against the compressed flue gas, a heated lean flue gas pipe (26') for leading the heated lean flue gas from the heat exchange unit (11) into a lean flue gas expander (8), an expanded lean flue gas pipe (27) for releasing the lean flue gas into the surroundings, a rich absorbent pipe (19) for leading rich absorbent collected at the bottom of the absorber (16) and introduction thereof into a desorber column (30) at the top of packed stripper section (31), steam pipes (52', 40', 56') for introduction of steam into the desorber column (30) below the packed stripper section (31), a CO2 withdrawal pipe (48) arranged to withdraw CO2 from the top of the desorber column (30) for further treatment and disposal, and a lean absorbent pipe (18, 49) for leading lean absorbent collected at the bottom of the desorber column (30) and introduction thereof into the absorber column (16), characterized in that a side draw pipe (18') is arranged to withdraw a part of the lean absorbent in the lean absorbent pipe (18), introduce the withdrawn absorbent into the cooling water heat exchanger (25') for cooling thereof against heat medium received from the district heating plant in a heat medium pipe (3), where a heat medium return pipe (3') is arranged to return the thus heated heat medium to the district heating plant, and a cooling medium introduction pipe (23') for leading the cooled lean absorbent from the heat exchanger (25') and introduction thereof at the top of the cooler packing (21).

According to one embodiment, a CO2 cooler cooling water pipe (44) is arranged to introduce cooling water to the top of a CO2 cooler (43) arranged at the top of the desorber (30) to cool the CO2 and steam by countercurrent flow of water and the CO2 and steam before withdrawal through the CO2 withdrawal pipe (48), where a CO2 cooler collector plate (42) is arranged below the CO2 cooler (43) to collect the used cooling water and a CO2 cooling water withdrawal pipe (45) is arranged to withdraw used cooling water from the CO2 cooler collector plate (42), and means are provided to deliver the heat of the cooling water in the CO2 cooler cooling water withdrawal pipe (45) to the district heating plant.

According to yet an embodiment, the means for delivering heat to the district heating plant comprises a CO2 cooler heat exchanger (47) where a CO2 cooler incoming heat medium pipe (4) is arranged to deliver a heat medium to the CO2 cooler heat exchanger (47) from the district heating plant and a CO2 cooler heat medium return pipe (4') is arranged to the CO2 cooler heat exchanger (47) to deliver heated heat medium back to the district heating plant, and the CO2 cooler return pipe (47) is arranged to deliver hot cooling water to the CO2 cooler heat exchanger (47) and the CO2 cooler cooling water pipe (44) is arranged to deliver cooling water cooled in the heat exchanger to the top of the CO2 cooler (43).

According to another embodiment, the cooling fluid received in the CO2 cooler incoming heat medium pipe (4) is water, the CO2 cooler incoming heat medium pipe (4) is connected to the CO2 cooler cooling water pipe, and the CO2 cooler heat medium return pipe (4') is connected to the CO2 cooler cooling water return pipe (45).

### Short description of the figures

Fig. 1 is a flow chart of an embodiment of a plant according to the present invention,
   and
Fig. 2 is a flow chart of another alternative embodiment of the invention.

### Detailed description of the invention

The present invention relates to a method and a plant for CO2 capture which is optimized for capturing CO₂ from an incoming, substantially water saturated, flue gas. A typical source for the flue gas is a plant for district heating or a combined plant for production of electrical power and heat for district heating. In the present description and claims, the expression "plant for district heating" or "district heating plant" is used include both a plant for district heating and a combined plant for production of electrical power and heat for district heating.

The temperature of the incoming flue gas is dependent on the flue gas generating plant, and the heat recovery system of the plant for district heating generating the flue gas and is normally higher than 50 °C, such as higher than 55 °C, or higher than 58 °C, and lower than 70 °C, such as lower than 65 °C, or lower than 62 °C, such as about 60 °C. The incoming flue gas is substantially water saturated at said temperatures, and at ambient pressure.

Figure 1 is a flow diagram illustrating one embodiment of the present invention. The flue gas is introduced into the present CO₂ capture plant through a flue gas pipe 1 and is optionally introduced into a pre-treatment unit 2 where the flue gas may be pre-treated before introduction into the present plant. The pre-treatment may comprise scrubbing with water for removal of particles and/or cooling for adjustment of the temperature of the incoming gas. However, the pre-treatment unit may often be omitted as the flue gas is scrubbed, water saturated and at the required temperature as mentioned above. The flue gas from the CO₂ generating plant is normally at a pressure close to ambient pressure and is introduced into a flue gas compressor 6 directly from the flue gas pipe or a pre-treated flue gas pipe 5 for leading the flue gas from the pre-treatment unit 2 and is compressed to a pressure of typically 5 to 12 bara.

The flue gas compressor is operated by an electrical motor, and/or other driver such as a steam turbine, 7 which is arranged on a common shaft 9 together with the flue gas compressor 6, and a CO₂ lean flue gas expander 8, which will be described further below. As the flue gas introduced into the flue gas compressor 6 has a higher temperature than normally used, and is water saturated, the duty of the compressor 6 has to be increased compared to introduction at 30 °C.

The compressed flue gas is led in a compressed flue gas line 10 into a heat exchange unit 11, where the compressed and thus heated flue gas, is cooled by heat exchanging against CO₂ lean flue gas and heating media for a reboiler 57, as will be further described below.

The illustrated embodiment of the heat exchange unit comprises three heat exchangers. The compressed and hot flue gas is first introduced into a first flue gas heat exchanger 12 against CO₂ lean flue gas. The flue gas leaving the first flue gas heat exchanger 12 is then introduced into a reboiler heat exchanger 13 and then led to a second flue gas heat exchanger 14, where the gas is further cooled against CO₂ lean flue gas.

The thus cooled compressed flue gas is then led from the heat exchange unit 11 in a cooled flue gas pipe 15 to the lower part of an absorber 16. Typically, the cooled and compressed flue gas introduced into the absorber 16 has a temperature from about 100 to 110 °C. In the absorber the flue gas is brought in countercurrent flow to a liquid CO₂ absorbent introduced through a lean absorbent pipe 18 at the top of a packed absorber sections 17 to ascertain intimate contact between the flue gas flowing upwards in the packed section and the CO₂ absorbent. The skilled person will understand that the packed absorber section may comprise several packed sections, typically 2 or 3, arranged at the top of each other. Absorbent having absorbed CO₂, or rich absorbent, is collected at the bottom of the absorber 16, and withdrawn though a rich absorbent pipe 19, and regenerated as will be further described below. Typically, the temperature of the rich absorbent being withdrawn from the absorber 16 is from about 105 to 115 °C as it is heated by the exothermal absorption reaction of CO₂.

The flue gas leaving the packed absorber section 17, and from which CO₂ have been absorbed, herein called "lean flue gas", typically having a temperature of about 95 to 105 °C is led into a cooler packing 21, where the lean flue gas is cooled by contercurrent flow to cooled CO₂ absorbent introduced through a cooled absorbent line 23' to the top of the cooler packing. The cooler packing 21 is arranged at the top of the absorber 16. The skilled person will understand that the cooler packing maybe arranged in one or more packings, normally 1 to 3.

The cooled absorbent introduced at the top of the cooler packing is withdrawn from the lean absorbent line 18 in an withdrawal line 18' and is cooled in a lean absorbent cooler 25 against an aqueous cooling fluid from a domestic heating system which is introduced via an incoming heat medium pipe 3, and returned into the domestic heating plant in a heat medium return pipe 3', for transfer of heat energy from the lean flue gas cooler 20 to the domestic heating plant to produce more heat for domestic heating purposes. The cooled CO₂ absorbent is withdrawn from the lean absorbent cooler 25 in a cooled absorbent pipe 23' and is introduced to the top of the cooler packing 21. The cooling of the CO₂ lean flue gas in the cooling section 20 causes part of the humidity in the lean flue gas to condense and thus reduce the water content in the CO₂ lean flue gas. Normally, from about 10 to 60 % of the lean absorbent in the absorbent line 18 is withdrawn through the withdrawal line 18' and is cooled in the lean absorbent cooler 25 from typically 95 -105 °C to about 60 to 70 °C.

The cooled CO₂ lean flue gas leaving the lean flue gas cooling section at temperature of typically 60 to 75 °C, is withdrawn through a CO₂ lean flue gas pipe 26 and first introduced into the heat exchange unit 11 where the gas is first heated to typically 120 to 130 °C in the second flue gas heat exchanger 14 and thereafter introduced into the first flue gas heat exchanger 12 where the CO₂ lean flue gas is heated by heat exchanging against incoming CO₂ rich flue gas. The thus heated CO₂ lean flue gas, typically at a temperature of about 190 to 200 °C, is then introduced into the expander 8 where the lean flue gas is expanded to ambient pressure, and thereby cooled to typically about 25 to 35 °, such as 30 °C, and released into the surroundings via an expanded CO₂ lean flue gas pipe 27, preferably through a not shown stack.

As mentioned above, CO₂ rich absorbent is withdrawn from the bottom of the absorber in the rich absorbent pipe 19, pumped by a rich absorbent pump 28 and introduced into a desorber column 30. The temperature of the rich absorbent being introduced into the desorber column is typically about 105 to 115 °C. A rich absorbent control valve 29 is preferably arranged to control / reduce the pressure of the rich solvent before introduction into the desorber column 30 at the top of serially arranged packed stripper section 31. The skilled person will understand that the packed stripper section may comprise several packed sections, typically 2 or 3, arranged at the top of each other. In the packed stripper section 31 CO₂ is stripped from the liquid absorbent by countercurrent flow of steam introduced from different sources of steam below the packed stripper section 31, as will be described below.

CO₂ stripped from the absorbent and steam leaving the packed desorber section 31 typically has a temperature of about 100 - 120 °C flows upwards in the desorber column 30 through a lower desorber collector plate 32 and into a packed recuperation cooler section 33, where the steam and CO₂ are cooled by countercurrent flow to cooling water. The cooling water is introduced at the top of the packed recuperation cooler section 33 at a temperature of about 90 - 100 °C from a recuperation cooler water pipe 34. Cooling water and water condensed in the packed recuperation cooler section 33 and having a temperature of about 95- 105 °C, is collected at the lower desorber collector plate 32 and is withdrawn through a recuperation cooler water withdrawal pipe 35, flashed over a recuperation cooler flash valve 36 and introduced into a recuperation cooler flash tank 37.

Water collected at the bottom of the recuperation cooler flash tank 37 is withdrawn through a recuperation cooling water recycle pipe 38 and pumped in a recuperation cooler water pump 39 into the recuperation cooler water pipe 34 and introduced at the top of the packed recuperation cooler section as cooling water.

The steam formed by flashing in the recuperation cooler flash tank 37 is withdrawn through a recuperation cooler steam pipe 40 and compressed in a recuperation cooler steam compressor 41 before being introduced into the desorber below the packed stripper section 31 as stripping steam at a temperature of about 140 -150 °C.

Steam and CO₂ leaving the top of the packed recuperation cooler section 33 continues upwards in the desorber 30 through a CO₂ cooler collector plate 42 and is further cooled from about 90 - 100 °C by countercurrent flow against cooling water in a CO₂ cooler packed section 43, to a temperature of about 30 °C. The cooling water is introduced at the top of the CO₂ cooler packed section 43 from a CO₂ cooler cooling water pipe 44. The cooling water is collected on the CO₂ cooler collector plate 42 and is withdrawn through a CO₂ cooler water return pipe 45, pumped by a CO₂ cooler cooling water pump 46 into a CO₂ cooler heat exchanger 47 for cooling of the water against a heat medium received from the district heating plant in an incoming heat medium pipe 4. Heat medium heated in the CO₂ cooler heat exchanger is withdrawn through a heat medium return pipe 4' and returned as heated heat medium to the district heating plant. The water cooled in the CO₂ cooler heat exchanger 47 is re-introduced into the CO₂ cooler via the CO₂ cooler cooling water pipe 44.

The skilled person will understand that the efficiency of steam generation from the flashing of the recuperation cooling water in the recuperation cooler flash tank 37 may be increased by a two-step flashing process where the water phase leaving the flash tank 37 is flashed over a second flash valve into a second flash tank. In such a two-step flashing process the gas phase generated in the second flash tank will be compressed in a second recuperation cooler steam compressor to the same pressure as the gas phase leaving the recuperation cooler steam compressor 41 and introduced into the desorber column 30 as additional stripping steam.

As mentioned above, the cooling water for cooling of the CO₂ and steam in the CO₂ cooler packed section 43 in the CO₂ cooler heat exchanger 47 is cooled against a cooling medium received from the district heating in a CO₂ cooler incoming heat medium pipe 4 at a temperature of about 50 - 70 °C, such as about 60 °C, and returned into the CO₂ generating plant in a CO₂ cooler heat medium return pipe 4' at a temperature of about 80 to 100 °C, such as about 90 °C, for transfer of heat energy from the CO₂ cooler packed section 43 to the CO₂ generating plant to produce more heat for domestic heating purpose. The skilled person will understand that the temperature of the incoming heat medium in CO₂ cooler heat medium pipe 4 may vary dependent on the district heating plant, and that the indicated temperature is the normal scope of temperatures of cold heat medium from such plants.

The cooled CO₂ and steam are withdrawn from the top of the desorber 30 in a CO₂ withdrawal pipe 48 and is introduced into a not shown module for drying, compression and cooling of the captured CO₂ before being exported from the plant.

Lean absorbent, i.e., absorbent being stripped to remove CO₂, is collected at the bottom of the desorber 30 and withdrawn therefrom through a stripped absorbent pipe 49 at a temperature of about 110 - 120 °C and flashed through a lean flash valve 50 and introduced into a flash tank 51. Liquid collected in the bottom of the flash tank 51 having a temperature of about 95 -105 °C, is pumped by a pump 54 into the lean absorbent pipe 18. A lean absorbent control valve 55 is preferably arranged to control the flow of lean absorbent leaving the lean absorbent pump 54.

Steam is withdrawn from the lean flash tank 51 through a lean flash pipe 52, compressed in a lean flash compressor 53 and introduced into the desorber below the packed section 31 via a compressed lean flash pipe 52' at a temperature of about 150 to 200 °C as stripping steam.

A part of the stripped absorbent collected at the bottom of the desorber 30 is withdrawn through a reboiler pipe 56 and introduced into a reboiler 57 in which the stripped absorbent is heated to generate steam which is introduced as stripping steam into the desorber 30 via a reboiler steam pipe 56'. The reboiler 57 receives hot steam for heating from the reboiler heat exchanger 13 in a reboiler heat pipe 58 at a temperature higher than about 128 °C and the steam used for heating in the reboiler is returned to the reboiler heat exchanger 13 in the form of water by a reboiler water return pipe 59 at a temperature of about 126 °C. This heat transfer from reboiler heat exchanger 13 to the reboiler 57 can be by means of other heat transfer media than water, such as oil.

Introduction of water saturated flue gas at a higher temperature than earlier suggested, such as from 50 to 70 °C, typically about 60 °C into the flue gas compressor 6 increases the duty of the flue gas compressor 6 compared to the earlier suggested temperature of 30 °C or lower, see e.g., WO2017042163. The increased compressor duty requires input of more electrical power to the motor 7. However, by compressing water saturated flue gas at comparably higher temperature than earlier suggested and allowing condensing of the flue gas at higher temperature and pressure, the energy from condensing may be obtained at higher temperatures. As a result, both the cooling water heat exchanger 25 and the CO₂ cooling water cooler 47 can deliver hot water to other purposes, such as a domestic heating plant, at temperatures above 80 °C, preferably about 90 °C. Additionally, the temperature in both the absorber 16 and the desorber 30 increases. As a result of the increased temperatures and the resulting increased flow of steam in the absorber and desorber, flashing of the lean absorbent in the lean flash tank 51 and the recuperation cooler flash tank 37, generates more efficiently the volumes of steam which is necessary for stripping. The generated volumes of steam are compressed and returned into the desorber 30 as stripping steam as described above.

Figure 2 illustrates an alternative embodiment of the present invention, in which the CO₂ is cooled in direct contact with the heat fluid from the district heating plant in cooler 43. The heat fluid circulating in a district heating system is normally water.

According tot this embodiment, the CO₂ cooler 43 is cooled by direct contact with water from the district heating Cold water, typically at a temperature of 50 - 70 °C, such as about 60 °C, is introduced from the heat medium pipe 4 to the top of the CO₂ cooler 43 and flows counter currently to the CO₂ flowing upwards in the CO₂ cooler 43. The water heated by cooling the CO₂ is collected at the collector plate 42, withdrawn via the cooling water pipe 45, and pumped into the heat medium return line 4' by the cooling water pump 46. The temperature of the water returned in line 4' is typically about 80 to 100 °C, such as about 90 °C.

The skilled person will understand that a plant for district heating may comprise an energy storage unit for storage of heat energy in periods where the heat generation is higher than the demand and deliver heat energy when the heat generation is lower than the demand. Heat may be stored as hot water in large well insulated tanks or in salt solutions having a melting point between 70 and 100 °C.

## Claims

1. A method for capturing CO₂ from a flue gas from a district heating plant fired on a carbonaceous fuel, where the flue gas is compressed and thereafter cooled before the flue gas is introduced into an absorber (16), where the flue gas is brought in countercurrent flow to an aqueous CO₂ absorbent solution introduced into the absorber (16), to give a lean flue gas that is withdrawn from the absorber (16), reheated against incoming compressed flue gas, and thereafter expanded and released into the atmosphere, where the rich absorbent having absorbed CO₂ is collected at the bottom of the absorber (16), withdrawn therefrom and introduced into a regenerator (30) in which the CO₂ rich absorbent is stripped to release CO₂ by countercurrent flow to steam to give a lean absorbent, withdrawing the stripped, or lean absorbent from the bottom of the regenerator (30) and introduction of the lean absorbent into the absorber (16), and withdrawing of the CO₂ stripped of the absorbent and steam from the regenerator (30) for further treatment and export for deposition of the CO₂, **characterized in that** the flow of lean absorbent is split in two, a first flow which is introduced at the top of an absorbent packing (17) in the absorber (16), and a second flow which is introduced at the top of a cooler packing (21) at the top of the absorber for cooling and drying of the lean flue gas before being reheated against incoming compressed flue gas, and thereafter expanded and released into the surrounding, and wherein the second absorbent flow is cooled against a heat fluid received from the district heating plant and wherein the thus heated heat fluid is led back to the district heating plant.

2. A method according to claim 1, wherein CO₂ and steam stripped of the absorbent is cooled by countercurrent flow to an aqueous cooling fluid in a CO₂ cooler arranged at the top of the regenerator before the CO₂ is withdrawn for further treatment, and where the heat transferred from the CO₂ and steam to the aqueous cooling fluid is transferred directly or indirectly to the district heating plant.

3. The method according to claim 2, wherein the aqueous cooling fluid used to cool the CO₂ and steam in the CO₂ cooler is water circulated as heat fluid in the district heating plant, where water received from the district heating plant is introduced as aqueous cooling fluid to the top of the CO₂ cooler, and the used and thus heated aqueous cooling fluid collected below the cooler is returned to the district heating plant.

4. The method of claim 2, wherein the aqueous cooling liquid used to cool the CO₂ and steam in the CO₂ cooler circulates in a loop and where the aqueous cooling fluid is cooled in a CO₂ cooler heat exchanger against a heat medium received from and circulated back to the district heating plant to transfer the heat thereto.

5. The method according any of the claims 1-4, wherein the second flow of lean absorbent which is introduced to the top of the cooler packing at the top of the absorber constitutes from 10 to 60 %, such as 20 to 50 % of the total flow of lean absorbent introduced to the absorber column.

6. The method according to any of the preceding claims, wherein the second flow of lean absorbent is cooled to a temperature from 55 to 75 deg. C, such as from 60 to 70 deg. C.

7. The method according to any of the claims 1 to 7, wherein the incoming flue gas to be compressed is water saturated and has a temperature of 50 to 70 °C.

8. A plant for capturing CO₂ from a flue gas from a district heating plant fired on a carbonaceous fuel comprising a flue gas pipe (1) for introduction of the flue gas into a flue gas compressor (6) operated by a motor (7), and/or another driver such as a steam turbine (7), a compressed flue gas pipe (10) for introducing the compressed flue gas into a heat exchange unit (11) wherein the compressed flue gas is cooled against a CO₂ lean flue gas, a cooled flue gas pipe (15) for withdrawing the cooled flue gas and introduction thereof into absorber column (16) below packed section (17), a lean absorbent pipe (18) for introduction of lean absorbent at the top of the packed section (17), a lean flue gas pipe (26) connected to the top of the absorbent column (16) for leading the lean flue gas from the absorber column (16) to the heat exchange unit (11) to be heated against the compressed flue gas, a heated lean flue gas pipe (26') for leading the heated lean flue gas from the heat exchange unit (11) into a lean flue gas expander (8), an expanded lean flue gas pipe (27) for releasing the lean flue gas into the surroundings, a rich absorbent pipe (19) for leading rich absorbent collected at the bottom of the absorber (16) and introduction thereof into a desorber column (30) at the top of packed stripper section (31), steam pipes (52', 40', 56') for introduction of steam into the desorber column (30) below the packed stripper section (31), a CO₂ withdrawal pipe (48) arranged to withdraw CO₂ from the top of the desorber column (30) for further treatment and disposal, and a lean absorbent pipe (18, 49) for leading lean absorbent collected at the bottom of the desorber column (30) and introduction thereof into the absorber column (16), **characterized in that** a side draw pipe (18') is arranged to withdraw a part of the lean absorbent in the lean absorbent pipe (18), introduce the withdrawn absorbent into the cooling water heat exchanger (25') for cooling thereof against heat medium received from the district heating plant in a heat medium pipe (3), where a heat medium return pipe (3') is arranged to return the thus heated heat medium to the district heating plant, and a cooling medium introduction pipe (23') for leading the cooled lean absorbent from the heat exchanger (25') and introduction thereof at the top of a cooler packing (21) at the top of the absorber.

9. The plant according to claim 8, wherein a CO₂ cooler cooling water pipe (44) is arranged to introduce cooling water to the top of a CO₂ cooler (43) arranged at the top of the desorber (30) to cool the CO₂ and steam by countercurrent flow of water and the CO₂ and steam before withdrawal through the CO₂ withdrawal pipe (48), where a CO₂ cooler collector plate (42) is arranged below the CO₂ cooler (43) to collect the used cooling water and a CO₂ cooling water withdrawal pipe (45) is arranged to withdraw used cooling water from the CO₂ cooler collector plate (42), and means are provided to deliver the heat of the cooling water in the CO₂ cooler cooling water withdrawal pipe (45) to the district heating plant.

10. The plant according to claim 9, wherein the means for delivering heat to the district heating plant comprises a CO₂ cooler heat exchanger (47) where a CO₂ cooler incoming heat medium pipe (4) is arranged to deliver a heat medium to the CO₂ cooler heat exchanger (47) from the district heating plant and a CO₂ cooler heat medium return pipe (4') is arranged to the CO₂ cooler heat exchanger (47) to deliver heated heat medium back to the district heating plant, and the CO₂ cooler return pipe (47) is arranged to deliver hot cooling water to the CO₂ cooler heat exchanger (47) and the CO₂ cooler cooling water pipe (44) is arranged to deliver cooling water cooled in the heat exchanger to the top of the CO₂ cooler (43).

11. The plant according to claim 9, wherein the cooling fluid received in the CO₂ cooler incoming heat medium pipe (4) is water, the CO₂ cooler incoming heat medium pipe (4) is connected to the CO₂ cooler cooling water pipe, and the CO₂ cooler heat medium return pipe (4') is connected to the CO₂ cooler cooling water return pipe (45).

12. A method according to any of claim 1 to 7, wherein the second absorbent flow which is introduced at the top of the cooler packing cooling and drying of the lean flue gas has 25 - 45 K lower temperature as the first flow which is introduced at the top of the absorbent packing.

13. A plant according to any of claim 8 to 11, wherein withdrawn lean absorbent is cooled by 25 - 45 K before introduction at the top of the cooler packing (21).

## Patentansprüche

1. Verfahren zum Erfassen von CO₂ von einem Rauchgas von einem Fernwärmewerk, das mit einem kohlenstoffhaltigen Brennstoff befeuert wird, wobei das Rauchgas komprimiert und anschließend gekühlt wird, bevor das Rauchgas in einen Absorber (16) eingeführt wird, wobei das Rauchgas in einem Gegenfluss zu einer wässrigen CO₂-Absorptionsmittellösung gebracht wird, die in den Absorber (16) eingeführt ist, um ein mageres Rauchgas zu erhalten, das von dem Absorber (16) abgezogen, gegen hereinkommendes komprimiertes Rauchgas wieder erwärmt und anschließend expandiert und in die Atmosphäre freigesetzt wird, wobei das reichhaltige Absorptionsmittel, das CO₂ absorbiert hat, an dem Boden des Absorbers (16) gesammelt wird, von dort abgezogen und in einen Regenerator (30) eingeführt wird, in dem das CO₂-reichhaltige Absorptionsmittel entfernt wird, um CO₂ freizusetzen, durch Gegenfluss zu Dampf, um ein mageres Absorptionsmittel zu erhalten, Abziehen des entfernten oder mageren Absorptionsmittels von dem Boden des Regenerators (30) und Einführung des mageren Absorptionsmittels in den Absorber (16), und Abziehen des CO₂, das von dem das Absorptionsmittel entfernt wird, und Dampfs aus dem Regenerator (30) für eine weitere Behandlung und Export für eine Abscheidung des CO₂, **dadurch gekennzeichnet, dass** der Strom des mageren Absorptionsmittels in zwei Teile aufgeteilt wird: einen ersten Strom, der an der Oberseite einer Absorptionsmittelpackung (17) in dem Absorber (16) eingeführt wird, und einen zweiten Strom, der an der Oberseite einer Kühlerpackung (21) an der Oberseite des Absorbers eingeführt wird, zum Kühlen und Trocknen des mageren Rauchgases, bevor es gegen hereinkommendes komprimiertes Rauchgas wieder erwärmt und anschließend expandiert und in die Umgebung freigesetzt wird, und wobei der zweite Absorptionsmittelstrom gegen ein Wärmefluid gekühlt wird, das von dem Fernwärmewerk aufgenommen wird, und wobei das so erwärmte Wärmefluid zu dem Fernwärmewerk zurückgeführt wird.

2. Verfahren nach Anspruch 1, wobei CO2 und Dampf, der von dem Absorptionsmittel entfernt wird, durch Gegenfluss zu einem wässrigen Kühlfluid in einem CO₂-Kühler gekühlt wird, der an der Oberseite des Regenerators angeordnet ist, bevor das CO₂ für die weitere Behandlung entzogen wird und wobei die Wärme, die aus dem CO₂ und Dampf zu dem wässrigen Kühlfluid übertragen wird, direkt oder indirekt an das Fernwärmewerk übertragen wird.

3. Verfahren nach Anspruch 2, wobei das wässrige Kühlfluid, das verwendet wird, um das CO₂ und Dampf in dem CO₂-Kühler zu kühlen, Wasser ist, das als Wärmefluid in dem Fernwärmewerk zirkuliert wird, wobei Wasser, das von dem Fernwärmewerk aufgenommen wird, als wässriges Kühlfluid an die Oberseite des CO₂-Kühlers eingeführt wird, und das verwendete und daher erwärmte wässrige Kühlfluid, das unterhalb des Kühlers gesammelt wird, an das Fernwärmewerk zurückgeführt wird.

4. Verfahren nach Anspruch 2, wobei das wässrige Kühlfluid, das verwendet wird, um das CO₂ und den Dampf in dem CO₂-Kühler zu kühlen, in einem Kreislauf zirkuliert und wobei das wässrige Kühlfluid in einem CO₂-Kühler-Wärmetauscher gegen ein Wärmemedium gekühlt wird, das von dem Fernwärmewerk aufgenommen und dorthin zurück zirkuliert wird, um die Wärme dorthin zu übertragen.

5. Verfahren nach einem der Ansprüche 1 bis 4, wobei der zweite Strom des mageren Absorptionsmittels, der an die Oberseite der Kühlerpackung an der Oberseite des Absorbers eingeführt wird, von 10 bis 60 %, wie 20 bis 50 % des Gesamtstroms des mageren Absorptionsmittels ausmacht, der in die Absorbersäule eingeführt wird.

6. Verfahren nach einem der vorstehenden Ansprüche, wobei der zweite Strom des mageren Absorptionsmittels auf eine Temperatur von 55 bis 75 °C, wie von 60 bis 70 °C, gekühlt wird.

7. Verfahren nach einem der Ansprüche 1 bis 7, wobei das hereinkommende zu verdichtende Rauchgas wassergesättigt ist und eine Temperatur von 50 bis 70 °C aufweist.

8. Werk zum Erfassen von CO₂ von einem Rauchgas von einem Fernwärmewerk, das mit einem kohlenstoffhaltigem Brennstoff befeuert wird, umfassend ein Rohr (1) für Rauchgas für die Einführung des Rauchgases in einen Rauchgaskompressor (6), der durch einen Motor (7) und/oder einen anderen Antrieb wie eine Dampfturbine (7) angetrieben wird, ein Rohr (10) für komprimiertes Rauchgas zum Einführen des komprimierten Rauchgases in eine Wärmetauschereinheit (11), in der das komprimierte Rauchgas gegen ein CO₂-mageres Rauchgas gekühlt wird, ein Rohr (15) für gekühltes Rauchgas zum Abziehen des gekühlten Rauchgases und für die Einführung davon in die Absorbersäule (16) unterhalb eines Füllabschnitts (17), ein Rohr (18) für mageres Absorptionsmittel für die Einführung des mageren Absorptionsmittels an der Oberseite des Füllabschnitts (17), ein Rohr (26) für mageres Rauchgas, das mit der Oberseite der Absorptionsmittelsäule (16) verbunden ist, zum Leiten des mageren Rauchgases von der Absorbersäule (16) zu der Wärmetauschereinheit (11), um gegen das komprimierte Rauchgas erwärmt zu werden, ein Rohr (26') für erwärmtes mageres Rauchgas zum Leiten des erwärmten mageren Rauchgases von der Wärmeaustauscheinheit (11) in einen Expander (8) für mageres Rauchgas, ein Rohr (27) für expandiertes mageres Rauchgas zum Freisetzen des mageren Rauchgases in die Umgebung, ein Rohr (19) für reichhaltiges Absorptionsmittel zum Leiten des reichhaltigen Absorptionsmittels, das an dem Boden des Absorbers (16) gesammelt wird, und für die Einführung davon in eine Desorbersäule (30) an der Oberseite des Füllstripperabschnitts (31), Dampfrohre (52', 40', 56') für die Einführung von Dampf in die Desorberkolonne (30) unterhalb des Füllstripperabschnitts (31), ein CO₂-Abzugsrohr (48), das angeordnet ist, um CO₂ von der Oberseite der Desorbersäule (30) für die weitere Behandlung und Entsorgung abzuziehen, und ein Rohr (18, 49) für mageres Absorptionsmittel zum Leiten von magerem Absorptionsmittel, das an dem Boden der Desorbersäule (30) gesammelt wird, und für die Einführung davon in die Absorbersäule (16),
**dadurch gekennzeichnet, dass** ein seitliches Entnahmerohr (18') angeordnet ist, um einen Teil des mageren Absorptionsmittels aus dem Rohr (18) für mageres Absorptionsmittel abzuziehen, das abgezogene Absorptionsmittel in den Kühlwasser-Wärmetauscher (25') einzuführen, um es gegen ein Wärmemedium abzukühlen, das von dem Fernwärmewerk in einem Wärmemediumrohr (3) aufgenommen wird, wobei ein Wärmemediumrückführrrohr (3') angeordnet ist, um das so erwärmte Wärmemedium zu dem Fernwärmewerk zurückzuführen, und ein Kühlmediumeinführungsrohr (23') zum Leiten des gekühlten mageren Absorptionsmittels von dem Wärmetauscher (25') und für die Einführung davon an der Oberseite einer Kühlerpackung (21) an der Oberseite des Absorbers.

9. Werk nach Anspruch 8, wobei ein CO₂-Kühler-Kühlwasserrohr (44) angeordnet ist, um Kühlwasser an die Oberseite eines CO₂-Kühlers (43) einzuführen, der an der Oberseite des Desorbers (30) angeordnet ist, um das CO₂ und den Dampf durch Gegenfluss von Wasser und dem CO₂ und Dampf vor dem Abzug durch das CO₂-Abzugsrohr (48) zu kühlen, wobei eine CO₂-Kühler-Sammelplatte (42) unterhalb des CO₂-Kühlers (43) angeordnet ist, um das verwendete Kühlwasser zu sammeln, und ein CO₂-Kühlwasser-Abzugsrohr (45) angeordnet ist, um verwendetes Kühlwasser von der CO₂-Kühler-Sammelplatte (42) abzuziehen, und Mittel bereitgestellt sind, um die Wärme des Kühlwassers in dem CO₂-Kühler-Kühlwasser-Abzugsrohr (45) zu dem Fernheizkraftwerk zu liefern.

10. Werk nach Anspruch 9, wobei die Mittel zum Liefern von Wärme zu dem Fernheizungswerk einen CO₂-Kühler-Wärmetauscher (47) umfassen, wobei ein CO₂-Kühler-Eingangswärmemediumrohr (4) angeordnet ist, um ein Wärmemedium an den CO₂-Kühler-Wärmetauscher (47) von dem Fernheizungswerk zu liefern, und ein CO₂-Kühler-Wärmemediumrückführrohr (4') an dem CO₂-Kühler-Wärmetauscher (47) angeordnet ist, um erwärmtes Wärmemedium zurück zu dem Fernheizungswerk zu liefern, und das CO₂-Kühler-Rückführrohr (47) angeordnet ist, um heißes Kühlwasser zu dem CO₂-Kühler-Wärmetauscher (47) zu liefern, und das CO₂-Kühler-Kühlwasserrohr (44) angeordnet ist, um Kühlwasser, das in dem Wärmetauscher gekühlt wird, an die Oberseite des CO₂-Kühlers (43) zu liefern.

11. Werk nach Anspruch 9, wobei das Kühlfluid, das in dem CO₂-Kühler-Eingangswärmemediumrohr (4) aufgenommen ist, Wasser ist, das CO₂-Kühler-Eingangswärmemediumrohr (4) mit dem CO₂-Kühler-Kühlwasserrohr verbunden ist und das CO₂-Kühler-Wärmemediumrückführrohr (4') mit dem CO₂-Kühler-Kühlwasserrückführrohr (45) verbunden ist.

12. Verfahren nach einem der Ansprüche 1 bis 7, wobei der zweite Absorptionsmittelstrom, der an der Oberseite der Kühlerpackung eingeführt wird, der das magere Rauchgas kühlt und trocknet, eine um 25-45 K niedrigere Temperatur aufweist als der erste Strom, der an der Oberseite der Absorptionsmittelpackung eingeführt wird.

13. Werk nach einem der Ansprüche 8 bis 11, wobei das abgezogene magere Absorptionsmittel vor der Einführung an der Oberseite der Kühlerpackung (21) um 25-45 K gekühlt wird.

## Revendications

1. Procédé de capture de CO₂ à partir d'un gaz de combustion provenant d'une installation de chauffage urbain alimentée par un combustible carboné, où le gaz de combustion est comprimé puis refroidi avant d'être introduit dans un absorbeur (16), où le gaz de combustion est amené en flux à contre-courant d'une solution aqueuse d'absorbant de CO₂ introduite dans l'absorbeur (16), afin de donner un gaz de combustion pauvre qui est retiré de l'absorbeur (16), réchauffé au contact de gaz de combustion comprimé entrant, puis détendu et libéré dans l'atmosphère, où l'absorbant riche ayant absorbé du CO₂ est recueilli au niveau de la partie inférieure de l'absorbeur (16), retiré de celui-ci et introduit dans un régénérateur (30) dans lequel l'absorbant riche en CO₂ est soumis à extraction pour libérer du CO₂ par un flux à contre-courant de vapeur afin de donner un absorbant pauvre, de retrait de l'absorbant soumis à extraction ou pauvre de la partie inférieure du générateur (30) et introduction de l'absorbant pauvre dans l'absorbeur (16), et de retrait du CO₂ ayant été extrait de l'absorbant et de la vapeur du régénérateur (30) pour un traitement ultérieur et une exportation en vue du dépôt de CO₂, **caractérisé en ce que** le flux d'absorbant pauvre est divisé en deux, un premier flux qui est introduit au niveau de la partie supérieure d'un garnissage absorbant (17) dans l'absorbeur (16), et un second flux qui est introduit au niveau de la partie supérieure d'un garnissage de refroidisseur (21) au niveau de la partie supérieure de l'absorbeur pour refroidir et sécher le gaz de combustion pauvre avant qu'il ne soit réchauffé au contact de gaz de combustion comprimé entrant, puis détendu et libéré dans l'environnement, et dans lequel le second flux d'absorbant est refroidi au contact d'un fluide caloporteur reçu de l'installation de chauffage urbain et dans lequel le fluide caloporteur ainsi chauffé est renvoyé dans l'installation de chauffage urbain.

2. Procédé selon la revendication 1, dans lequel le CO₂ et la vapeur ayant été extraits de l'absorbant sont refroidis par un flux à contre-courant d'un fluide de refroidissement aqueux dans un refroidisseur de CO₂ agencé au niveau de la partie supérieure du régénérateur avant que le CO₂ ne soit retiré pour un traitement ultérieur, et où la chaleur transférée du CO₂ et de la vapeur au fluide de refroidissement aqueux est transférée directement ou indirectement dans l'installation de chauffage urbain.

3. Procédé selon la revendication 2, dans lequel le fluide de refroidissement aqueux utilisé pour refroidir le CO₂ et la vapeur dans le refroidisseur de CO₂ est de l'eau en circulation en tant que fluide caloporteur dans l'installation de chauffage urbain, où l'eau reçue de l'installation de chauffage urbain est introduite en tant que fluide de refroidissement aqueux dans la partie supérieure du refroidisseur de CO₂, et le fluide de refroidissement aqueux utilisé et ainsi chauffé recueilli sous le refroidisseur est renvoyé dans l'installation de chauffage urbain.

4. Procédé de la revendication 2, dans lequel le liquide de refroidissement aqueux utilisé pour refroidir le CO₂ et la vapeur dans le refroidisseur de CO₂ circule dans une boucle et où le liquide de refroidissement aqueux est refroidi dans un échangeur de chaleur du refroidisseur de CO₂ au contact d'un milieu caloporteur reçu de l'installation de chauffage urbain et remis en circulation dans celle-ci pour y transférer la chaleur.

5. Procédé selon l'une quelconque des revendications 1 à 4, dans lequel le second flux d'absorbant pauvre qui est introduit dans la partie supérieure du garnissage de refroidisseur au niveau de la partie supérieure de l'absorbeur constitue de 10 à 60 %, par exemple de 20 à 50 % du flux total d'absorbant pauvre introduit dans la colonne d'absorption.

6. Procédé selon l'une quelconque des revendications précédentes, dans lequel le second flux d'absorbant pauvre est refroidi à une température allant de 55 à 75 degrés C, par exemple de 60 à 70 degrés C.

7. Procédé selon l'une quelconque des revendications 1 à 7, dans lequel le gaz de combustion entrant à comprimer est saturé d'eau et a une température de 50 à 70 °C.

8. Installation de capture de CO₂ à partir d'un gaz de combustion provenant d'une installation de chauffage urbain alimentée par un combustible carboné, comprenant une conduite de gaz de combustion (1) pour l'introduction du gaz de combustion dans un compresseur de gaz de combustion (6) actionné par un moteur (7), et/ou un autre dispositif d'entraînement tel qu'une turbine à vapeur (7), une conduite de gaz de combustion comprimé (10) pour l'introduction du gaz de combustion comprimé dans une unité d'échange de chaleur (11), dans laquelle le gaz de combustion comprimé est refroidi au contact d'un gaz de combustion pauvre en CO₂, une conduite de gaz de combustion refroidi (15) pour le retrait du gaz de combustion refroidi et son introduction dans une colonne d'absorption (16) sous une section de garnissage (17), une conduite d'absorbant pauvre (18) pour l'introduction d'absorbant pauvre au niveau de la partie supérieure de la section de garnissage (17), une conduite de gaz de combustion pauvre (26) raccordée à la partie supérieure de la colonne d'absorption (16) pour l'acheminement du gaz de combustion pauvre de la colonne d'absorption (16) vers l'unité d'échange de chaleur (11) afin de le chauffer au contact du gaz de combustion comprimé, une conduite de gaz de combustion pauvre chauffé (26') pour l'acheminement du gaz de combustion pauvre chauffé de l'unité d'échange de chaleur (11) vers un détendeur de gaz de combustion pauvre (8), une conduite de gaz de combustion pauvre détendu (27) pour la libération du gaz de combustion pauvre dans l'environnement, une conduite d'absorbant riche (19) pour l'acheminement d'absorbant riche recueilli au niveau de la partie inférieure de l'absorbeur (16) et son introduction dans une colonne de désorption (30) au niveau de la partie supérieure de la section d'extraction à garnissage (31), des conduites de vapeur (52', 40', 56') pour l'introduction de vapeur dans la colonne de désorption (30) sous la section d'extraction à garnissage (31), une conduite de retrait de CO₂ (48) agencée pour retirer le CO₂ de la partie supérieure de la colonne de désorption (30) en vue d'un traitement ultérieur et d'une élimination, et une conduite d'absorbant pauvre (18, 49) pour l'acheminement d'absorbant pauvre recueilli au niveau de la partie inférieure de la colonne de désorption (30) et son introduction dans la colonne d'absorption (16), **caractérisé en ce qu'**une conduite de soutirage latéral (18') est agencée pour retirer une partie de l'absorbant pauvre dans la conduite d'absorbant pauvre (18), introduire l'absorbant retiré dans l'échangeur de chaleur à eau de refroidissement (25') pour son refroidissement au contact d'un milieu caloporteur reçu de l'installation de chauffage urbain dans une conduite de milieu caloporteur (3), où une conduite de retour de milieu caloporteur (3') est agencée pour renvoyer le milieu caloporteur ainsi chauffé dans l'installation de chauffage urbain, et une conduite d'introduction de milieu de refroidissement (23') pour l'acheminement de l'absorbant pauvre refroidi provenant de l'échangeur de chaleur (25') et son introduction au niveau de la partie supérieure d'un garnissage de refroidisseur (21) au niveau de la partie supérieure de l'absorbeur.

9. Installation selon la revendication 8, dans laquelle une conduite d'eau de refroidissement de refroidisseur de CO₂ (44) est agencée pour introduire de l'eau de refroidissement au niveau de la partie supérieure d'un refroidisseur de CO₂ (43) agencé au niveau de la partie supérieure du désorbeur (30) pour refroidir le CO₂ et la vapeur par un flux à contre-courant d'eau et du CO₂ et de la vapeur avant le retrait à travers la conduite de retrait de CO₂ (48), où une plaque collectrice de refroidisseur de CO₂ (42) est agencée sous le refroidisseur de CO₂ (43) pour recueillir l'eau de refroidissement usée et une conduite de retrait d'eau de refroidissement de CO₂ (45) est agencée pour retirer l'eau de refroidissement usée de la plaque collectrice de refroidisseur de CO₂ (42), et des moyens sont prévus pour distribuer la chaleur de l'eau de refroidissement dans la conduite de retrait d'eau de refroidissement de refroidisseur de CO₂ (45) dans l'installation de chauffage urbain.

10. Installation selon la revendication 9, dans laquelle les moyens de distribution de chaleur dans l'installation de chauffage urbain comprennent un échangeur de chaleur de refroidisseur de CO₂ (47) où une conduite de milieu caloporteur entrant de refroidisseur de CO₂ (4) est agencée pour distribuer un milieu caloporteur dans l'échangeur de chaleur de refroidisseur de CO₂ (47) à partir de l'installation de chauffage urbain et une conduite de retour de milieu caloporteur de refroidisseur de CO₂ (4') est agencée au niveau de l'échangeur de chaleur de refroidisseur de CO₂ (47) pour distribuer le milieu caloporteur chauffé en retour dans l'installation de chauffage urbain, et la conduite de retour de refroidisseur de CO₂ (47) est agencée pour distribuer de l'eau de refroidissement chaude dans l'échangeur de chaleur de refroidisseur de CO₂ (47) et la conduite d'eau de refroidissement de refroidisseur de CO₂ (44) est agencée pour distribuer de l'eau de refroidissement refroidie dans l'échangeur de chaleur dans la partie supérieure du refroidisseur de CO₂ (43).

11. Installation selon la revendication 9, dans laquelle le fluide de refroidissement reçu dans la conduite de milieu caloporteur entrant de refroidisseur de CO₂ (4) est de l'eau, la conduite de milieu caloporteur entrant de refroidisseur de CO₂ (4) est raccordée à la conduite d'eau de refroidissement de refroidisseur de CO₂, et la conduite de retour de milieu caloporteur de refroidisseur de CO₂ (4') est raccordée à la conduite de retour d'eau de refroidissement de refroidisseur de CO₂ (45).

12. Procédé selon l'une quelconque des revendications 1 à 7, dans lequel le second flux absorbant qui est introduit au niveau de la partie supérieure du garnissage de refroidissement et de séchage du gaz de combustion pauvre a une température inférieure de 25 à 45 K à celle du premier flux introduit au niveau de la partie supérieure du garnissage absorbant.

13. Installation selon l'une quelconque des revendications 8 à 11, dans laquelle l'absorbant pauvre retiré est refroidi de 25 à 45 K avant d'être introduit au niveau de la partie supérieure du garnissage de refroidisseur (21).
